(19)

(11) **EP 2 610 726 B1**

(12) **EUROPEAN PATENT SPECIFICATION**

(45) Date of publication and mention of the grant of the patent: **29.08.2018 Bulletin 2018/35**

(51) Int Cl.: ***G06F 3/0486*** *(2013.01)* ***G06F 3/0481*** *(2013.01)* ***G06F 3/0484*** *(2013.01)*

(21) Application number: **12306567.4**

(22) Date of filing: **11.12.2012**

(54) **Drag and drop operation in a graphical user interface with highlight of target objects**

Drag-und-Drop-Betrieb auf einer grafischen Benutzerschnittstelle mit Markierung der Zielobjekte

Opération de glisser-déposer dans une interface utilisateur graphique avec mise en évidence d'objets cible

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2011 US 201161581477 P**

(43) Date of publication of application: **03.07.2013 Bulletin 2013/27**

(73) Proprietor: **Orange** **75015 Paris (FR)**

(72) Inventor: **Briand, Hyacinthe** **SAN FRANCISCO, CA California CA 94115 (US)**

(74) Representative: **Cabinet Plasseraud** **66, rue de la Chaussée d'Antin** **75440 Paris Cedex 09 (FR)**

(56) References cited:
**US-A1- 2007 234 226** **US-A1- 2009 113 330** **US-A1- 2010 146 425**

- **"DRAG AND DROP AVAILABLE TARGET INDICATOR", RESEARCH DISCLOSURE, MASON PUBLICATIONS, HAMPSHIRE, GB, no. 341, 1 September 1992 (1992-09-01), page 711, XP000320168, ISSN: 0374-4353**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 610 726 B1

## Description

### FIELD OF THE PRESENT SYSTEM:

The present invention generally relates to electronic devices such as mobile devices or computers, and more specifically to drag and drop operations.

### BACKGROUND OF THE PRESENT SYSTEM:

Like copy-paste or point-and-click, drag-and-drop has been a major feature for computer graphical user interfaces along with the commoditization of mouse devices. It may be used for moving/copying files to a new location (such as a folder). The icon representing a file can be dragged (through e.g. a select and hold user input) across a Graphical User Interface (GUI) to be dropped on a recipient or target icon, for instance representing a file directory. Another use case is when user is looking for deleting a file: its icon may be dropped to a trashcan icon to delete it. Such implementations can be seen on Windows™ Operating System (OS) 3.1 and further Windows™ versions. Overall, drag-and-drop corresponds to the action of moving a virtual object into another window or onto another virtual object.

The rise of connected screens and over-the-top media services creates new challenges for the drag-and-drop operation. First - on usage, the plurality of media that can be shared between devices is following an asymptotic curve making the drag-and-drop operation all the more significant. Second - on context of usage, the proliferation of small touch screens combined to bigger (in size) user input (thumb instead of pointer) are making the drag-and-drop more difficult that it used to be.

Existing solutions like the one available in the Windows™ OS propose a visual highlight of the target icon when the dragged icon is placed on top of it. The highlight only happens in the last stage of the drag and drop operation and does not provide any visual guidance to the user. Transposed to a small display screen, the user will get limited feedback from his electronic device when performing a drag and drop operation. As most smartphones can be controlled using touch inputs today, this known approach is limiting when the user misses the target icon he had in mind or when his hands move during this operation. This may the case for instance when he uses his device in a bus or a subway.

Documents US2009/113330-A1 and US2010/146425-A1 teach methods of indicating drag and drop targets for a dragged first object among a plurality of second objects in a graphical user interface (GUI), the method comprising rendering with a first rendering mode a first group of the second objects within the GUI onto which the dragged first object is likely to be dropped, which is assessed based for instance on the distance to the first group or a projection of the future displacements of the first object, while rendering with a second rendering mode distinct from the first rendering mode a second group of the second objects, the second group consisting of the remaining second objects.

There is still a need for improved drag and drop techniques that can be readily applied to electronic devices such as smartphones or tablets. There is a further need for helping and guiding the user as he performs a drag and drop operation on such a small display.

### SUMMARY OF THE PRESENT SYSTEM:

It is an object of the present system to overcome disadvantages and/or make improvements in the prior art.

The present invention relates to a method as defined in the appended claim 1. Thanks to the method, the user has the impression that as he drags the first object closer to a targeted second object, more and more non target second objects change in appearance. Indeed, as the dragged object comes in proximity to the user intended target for a drop, only a reduced number of second objects can be identified as potential targets, the first group, and more second objects are determined as non targets, the second group. The contrast in rendering between targets and non targets, as derived from the first object current position, will help the user to focus on an always more limited number of second objects, thus simplifying the GUI and his drag and drop experience.

The present invention also relates to an electronic device and a program product as defined in the appended claims 8 and 9 respectively.

### BRIEF DESCRIPTION OF THE DRAWINGS:

The invention is explained in further detail, and by way of example, with reference to the accompanying drawings wherein:

FIG. 1 shows a mobile device in accordance with an embodiment of the present system;
FIG. 2 shows an illustration of a first embodiment of the present system;
FIGs. 3A-3D, show an exemplary flowchart in accordance with an embodiment of the present method; and,
FIGs. 4A-4F show exemplary illustrations of the GUI according to an additional embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. An operative coupling may also include a wired and/or wireless coupling to enable communication between a media content platform, such as the media content serving a user device in accordance with an embodiment of the present system, and one or more user devices. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device of an electronic or user device so that it may be seen and interacted with by a user. The term rendering may also comprise all the actions required to generate a GUI prior to the display, like e.g. a map representation generated on a server side for a browser application on a user device.

In accordance with an embodiment of the present system, an electronic device provides a GUI for controlling an application program (AP) through user inputs such as touch inputs. An application program (AP) - or software - may be seen as any tool that functions and is operated by means of a computer, with the purpose of performing one or more functions or tasks for a user or another application program. To interact with and control an AP, a GUI of the AP may be displayed on the user device display.

Such a graphical user interface (GUI) may be provided in accordance with an embodiment of the present system:

- by an application program running locally on a device processor (a device based - or resident - application), such as part of a computer system of the mobile device, and/or,
- as provided by a network connected device or web based server, such as a media content server providing media content to the user device, the GUI being rendered on user device through a local application program connected to the media content server (commonly called a web based application or web application in short).

For instance, the present GUI enabling a drag and drop operation (as explained later on) may be generated locally by a device based application or rendered by a local AP connected to a server providing the GUI elements. The present GUI may also be part of the GUIs proposed by the device OS. The provided visual environment may be displayed by the processor on a display device of the user device, for instance a touch sensitive panel (touch panel in short), which a user may use to provide a number of touch inputs of different types.

A GUI is a type of user interface which allows a user to interact with electronic devices such as computers, hand-held devices such as smartphones or tablets, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server as mentioned before) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, a virtual representation or an icon that launches a particular application program. By way of another example, the GUI may present a typical user interface including a windowing environment and as such, may include menu items, pull-down menu items, icons, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system.

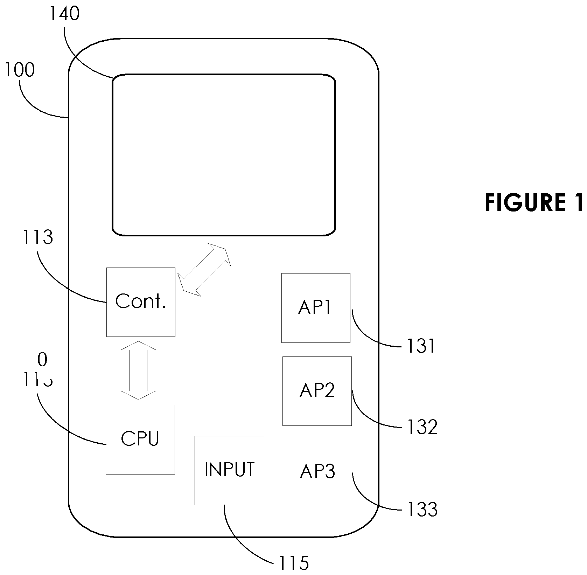

FIG. 1 is an illustration of an exemplary user device 100 used in the present system. In the here after description, the electronic device will be illustrated as a mobile device 100, such as a smartphone or a tablet, with a touch panel. This illustration is in no way limiting as the present teaching would work for any electronic devices such as laptops, desktops and the likes, using user input provided for instance with a mouse. The mobile device 100 comprises a display device 140, a processor 110, a controller 113 of the display device, and an input device 115.

In the present system, the user interaction with and manipulation of the application program rendered on a GUI may be achieved using the display device 140, or screen, which might be e.g. a touch panel operationally coupled to the processor 110 controlling the displayed interface.

Processor 110 may control the rendering and/or the display of the GUI on the display device 140 depending on the type of application program, i.e. resident or web-based. Processor 110 may also handle the user entries or inputs according to the present method. The user entries to interact with an application program may be provided through interactions with the touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI of an AP or displace windows and graphical objects as explained here after. The input received from a user's touch input is sent to the processor 110. The touch panel 140 is configured to detect and report the (location of the) touch inputs to the processor 110, which can interpret these touches in accordance with the application program and the currently displayed GUI. For example, the processor 110 can initiate a task, e.g. a control of the AP or send an activation message to a distant media server (not shown in FIG. 1) that a media content is to be streamed to and displayed on the display device 140, subsequent to a given touch input. The processor may also enable a drag and drop operation according to the present system.

The controller 113, e.g. a dedicated processor, may be provided to process input touches locally and reduce demand for the main processor 110 of the mobile device. The touch panel 140 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 140, other devices such as a stylus may be used in place of the user finger. An additional input device 115 may be provided to further interact with a GUI rendered on the display device 140. This may be the case for instance when using an electronic device such as a laptop or desktop, wherein the input device 115 is a mouse.

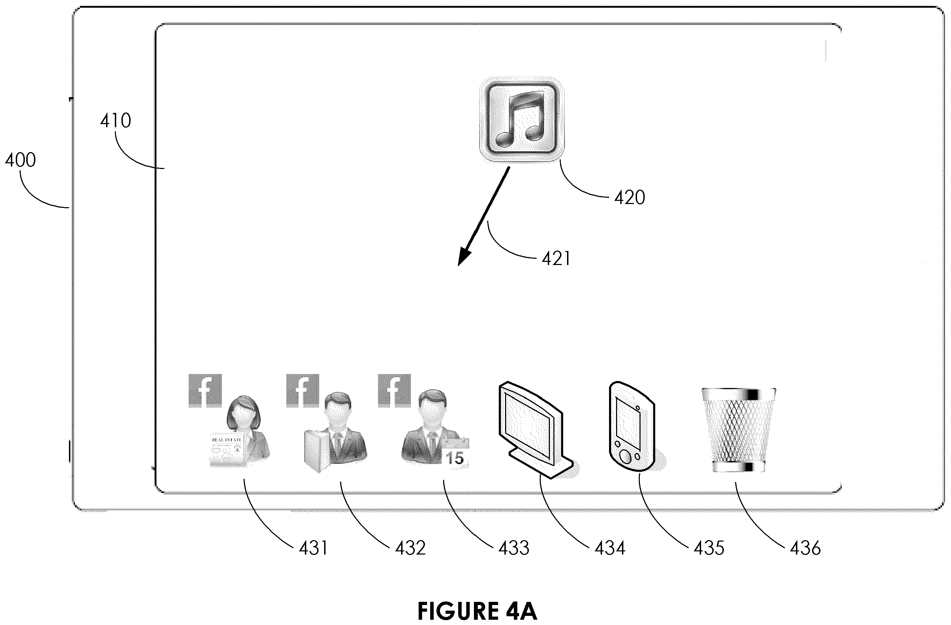

In the present system, the drag and drop operation may be performed using graphical objects of the OS GUI (like the GUI of an Android™ smartphone presenting AP icons that can be dragged and dropped onto different folder icons). Alternatively, a number of different applications may be provided with the mobile device 100, like AP1 131, AP2 132 and AP3 133 presenting GUIs such as the ones presented in FIGs. 4A to 4F, wherein a user can drag and drop a first object 420 onto a plurality of second objects 431 to 436. As mentioned before, such APs may be resident or web based.

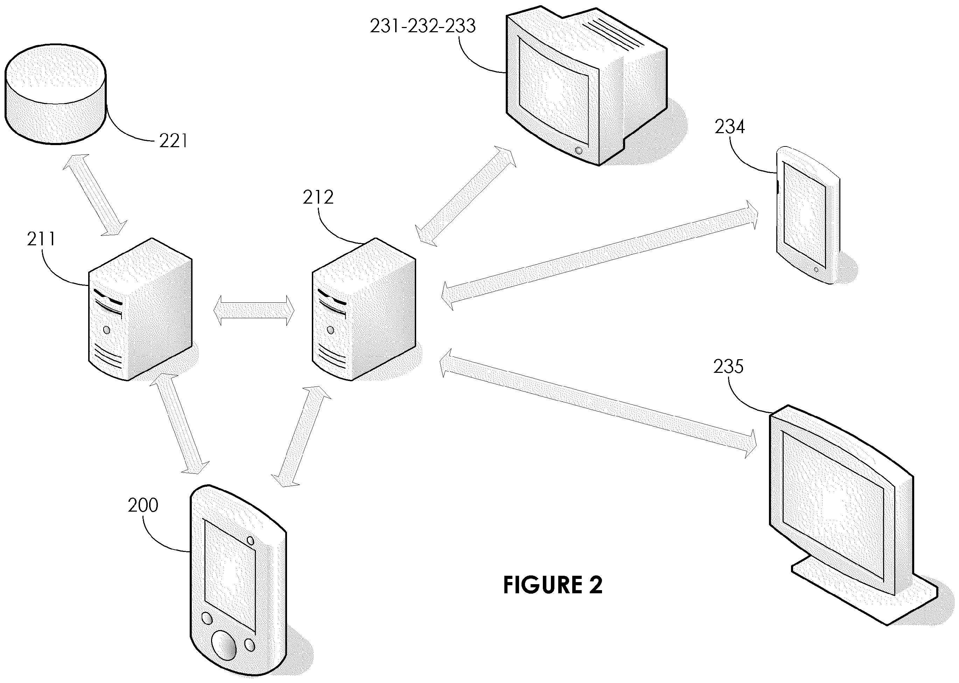

An example of the environment of a web based application is illustrated in FIG. 2. A mobile device 200 is configured for transferring a media content currently rendered or experienced on its display device. The content may be browsed from a media content server 211 that distributes media content from one or more media content libraries or database 221. The browsing may be enabled in a web browser or through a web application like one of the APs 131 to 133 mentioned here before.

An interface may allow the user to list different media contents from the media content database 211 available for viewing (if video content) or listening (if music). Once a user has selected a media content 420, illustrated in FIG. 4A with a music object or icon, he may want to share it with either friends on a social network or other devices operatively connected to his electronic device 200. To do so, a media transfer AP proposes a GUI as seen in FIGs. 4A to 4F, with a number of second (graphical) objects 431 to 436 representing different recipients such as friends on a social network (431 to 433), other devices (434, 435) or a trashcan to discard the media content 420.

Thanks to a drag and drop operation according to the present method, the user can drag music icon 420 to one of the second objects 431 to 436. The dropping on one of the second icon will cause the transfer AP to send an activation message for sharing the media content associated to the music icon with the recipient behind the chosen second icon. Illustrating the present drag and drop operation with the sharing of media content is a mere illustration, and other drag and drop operations, for instance for transferring or sorting out files, will benefit from the present teachings.

Going back to FIG. 2, the friend icons or objects 431 to 433 of FIGs. 4A to 4F correspond to other users connected through a social network behind an electronic device 231, 232 or 233 respectively. The other devices icons or objects 434 and 435 correspond respectively to other electronic devices 234 and 235 as illustrated in FIG. 2 with a tablet 234 and a flat screen 235. These different recipients of FIG. 2 may be registered with the transfer AP, thereby allowing the user to share the media content 420 with any one of them. A further trashcan object is available on the GUI of FIG. 4A, for instance for drag and dropping unwanted files.

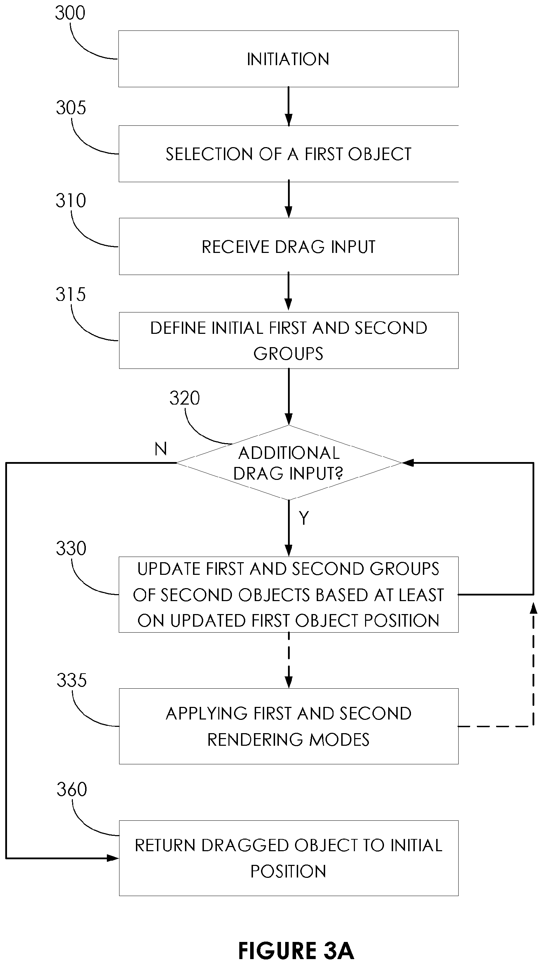

FIG. 3A is a flowchart illustrating an exemplary embodiment of the present method. Flowchart in FIG. 3A will be described in relation with the GUI examples of FIGs. 4A to 4F showing a drag and drop operation according to the present method.

In an initiation act 300, the user may launch the transfer AP and select a media content to share. As a result, a GUI of the transfer AP, as illustrated in FIG. 4A, may appear on the display device (or screen) 410 of his electronic device 400. The GUI may comprise as mentioned before a first (graphical) object 420, illustrated as a music icon. The GUI is arranged to enable a drag and drop operation (through a continuous user input, e.g. a continuous touch or mouse input) or mode between the first object 420 and one of a plurality of second (graphical) objects 431 to 436.

To do so, each time the user will provide a drag input on first object 420, the GUI will be updated by the processor of device 400 (referred to here after as the drag and drop loop or mode). Indeed the GUI will present a new position for the first object 420, according to the drag input received from the user. The drag input can be seen as a user input for displacing the first object. It may be for instance the sliding of a finger or a stylus on the touch panel of the electronic device 400, or the sliding of the pointer driven by a mouse as in known Windows™ environments.

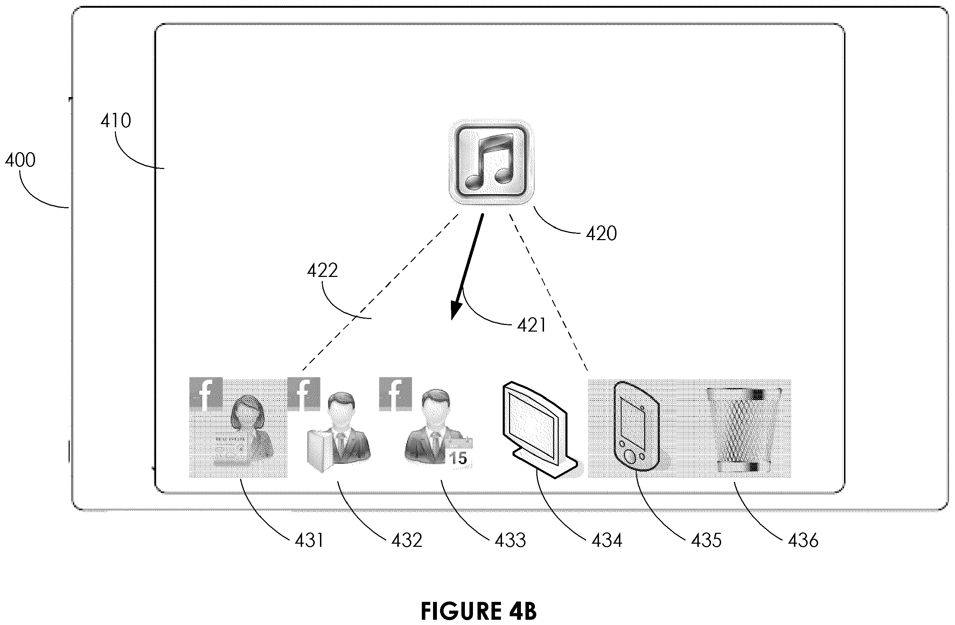

In the present system, an additional update of the GUI is performed in parallel to the displacement of the dragged object 420. This parallel update will be described in relation to FIGs. 4B to 4F.

In a further act 305, the user selects the first object 420, in order to drag and drop it onto one of the possible recipients/targets, namely the second objects 431 to 436. This selection of act 305 will trigger the known drag and drop loop as well as the present drag and drop operation. The triggering may be caused by a user input of a specific type, like a longer touch input (i.e. a select and hold on panel input) using one of his fingers, or a maintained selection of the pointer using a mouse, as known in the Windows™ or Apple™ OS. In the here after description, user inputs will be described as touch inputs from the user. The man skilled in the art will easily transpose the present teachings to a mouse based selection.

With the touch input of the specific type, the electronic device 400 enters the drag and drop mode or loop. The user can actually see that the drag and drop is initiated as he moves his finger across the screen 400. Indeed, the GUI will be updated to match all additional drag inputs, and the first object 420 will appear to follow the finger, as in known drag and drop operations.

In a further act 310, the processor of the electronic device 400 will monitor an initial drag input received from the user following the drag and drop mode initiation. Using this initial drag input, the processor will determine in a further act 315 initial grouping of the second objects. In the present method, the second objects, once the drag and drop mode is activated, present a binary state: each second object can either be a potential drop target for the first object, or not. Each state is associated to a different rendering mode. The first group of second objects will consist of the potential targets, i.e. it will refer to the second objects within the GUI onto which the selected first object may be dropped. The second group of second objects will refer to the non target second objects, and will consist of the remainder of the second objects.

A potential target, for a given position of the first object 420, is a second object onto which the first object may be - or is likely to be - dropped, based on a projection or anticipation of its future displacements. In other words, potential targets, as explained here after, are based on predictive techniques that define second objects that are still within reach of the first, at a given position in time of the first object along its drag trajectory.

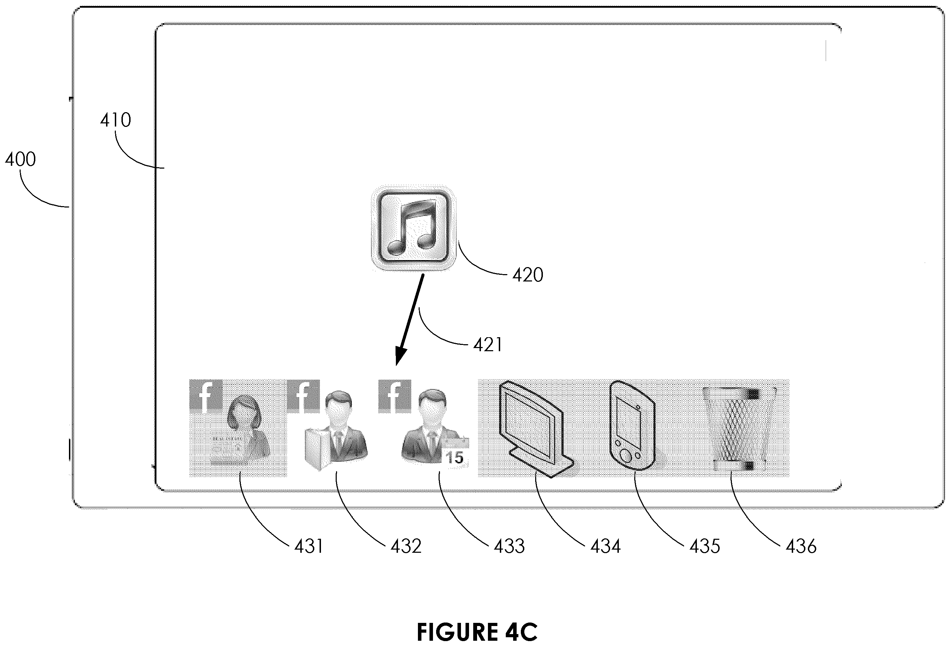

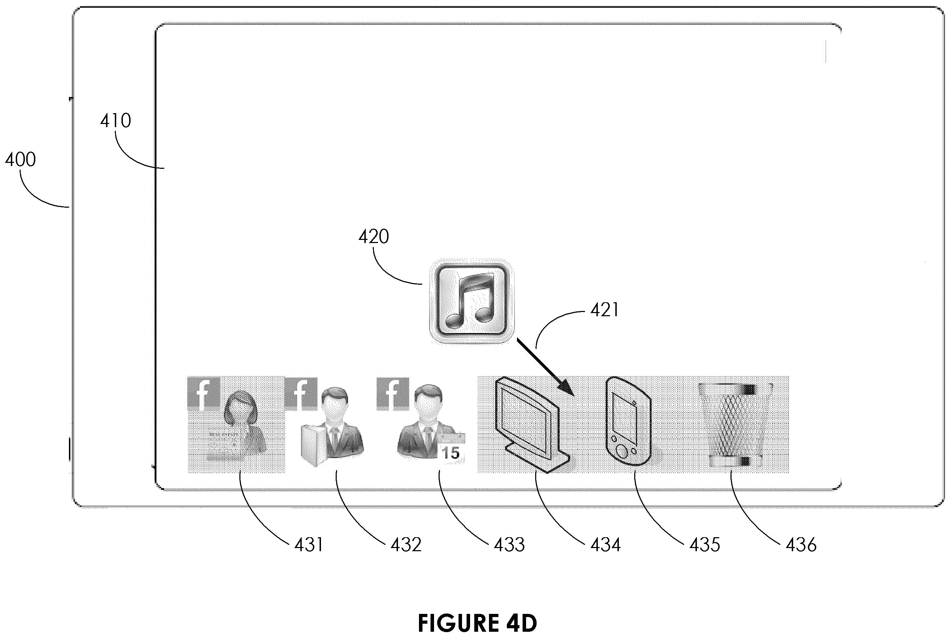

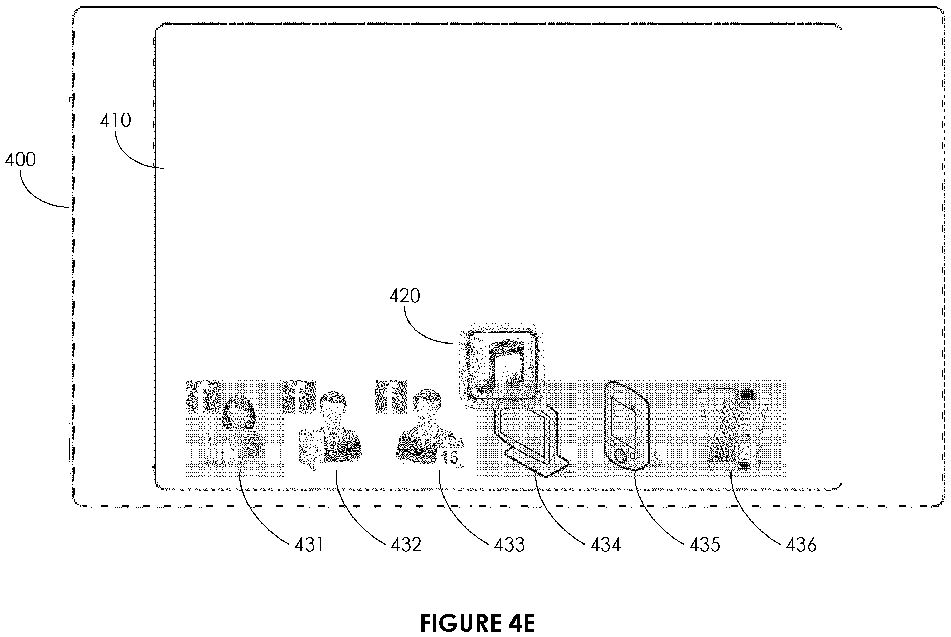

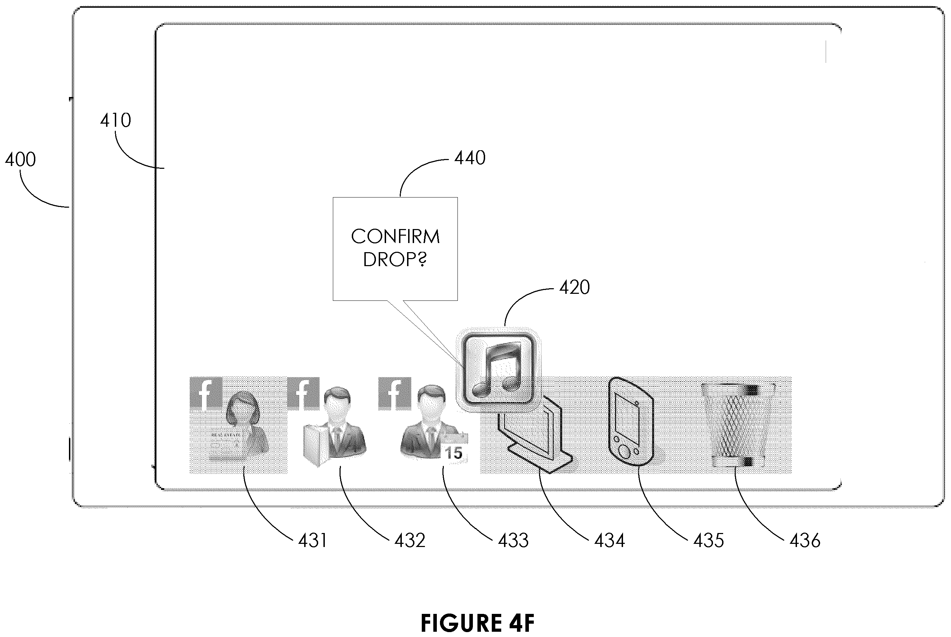

Thanks to this systematic distinction between the first and second groups, the user will constantly get a feedback of the potential targets, while the others may be dimmed, or become transparent, simplifying the user interface, as seen in FIGs. 4 detailed here after.

The first group may be initiated with all the second objects, or using one of the group determination techniques listed here after.

In a subsequent act 320, the processor of the electronic device 400 will check if a further drag input (continuous with the previous one) is provided by the user on the screen for the first object 420. The drag input may be imparted in the direction 421 as illustrated in FIG. 4A.

The additional drag input enables the processor to determine the first object new position. In parallel to updating the GUI (to move the first object to its new position according to the additional drag input), the processor of the electronic device 400 will update in a further act 330 the first and second groups based at least on the first object new position.

Different techniques are available to the man skilled in the art to determine and update the groups. The techniques listed here after all use at least the updated first object position.

**Distance based techniques:**

For each received additional drag input, the processor of the electronic device 400 will compute the first object updated position. Based on that new position, one possible simple technique may consist in computing the distance between the update first object A position and the second objects Bi positions. These distances are the actual distances to the second objects.

In order to give to the user the impression that the groups vary in size as he further drags the first object 420 towards second objects of his choice, the processor of the electronic device 400 may proceed as follows. Using the different distances ABi, a normalized distance di may be further calculated.

If A is the first object, and Bi one of n second objects,

If ABi the distance between Bi and A's updated position,

Let di be the normalized distance defined as:

$$di = \frac{ABi}{min_{j=1}^{n}(ABj)}$$

One may note that the distances may be measured from center of object to center of object, or edge to edge, or barycenter to barycenter.

The normalized distance for a second object may be seen as the ratio of its distance to the first object over the smallest of all distances (from all second objects) to that first object 420. The smallest distance is reached for a second object referred to as Bj. The normalized distance allows to compare how much more distant the other object Bi is to the first object than the closest second object. A ratio $\alpha$>1 may be defined to determine which objects are considered as close enough to the first object and which ones are not.

Provided di $\leq \alpha$ the second object Bi will be considered close enough to the second object Bj closest to the first object A, consequently a potential target part of the first group,

Provided di > a the second object Bi will be considered too far from the second object Bj, consequently a non target part of the first group,

As the first object is still distant from the second objects (example of FIG. 4B), the distribution of the normalized distance will present a concentration of values around 1 as for instance second objects 432, 433 and 434 are somewhat equidistant to the first object 420. As the first object gets closer and closer to second objects (example of FIG. 4C, second object 433 still being the closest one of the second objects), the outer most second objects will present normalized distances with large values, like greater than 2 or more. Less and less second objects will present normalized distances di close to 1. The first group will decrease in population while the second group will increase of the same. Using the examples of FIG. 4B and 4C:

- in FIG. 4B, second object 433 is the closest one and $AB_{433}$ the smallest distance), $AB_{432} \approx AB_{434}$ = 1,25, while the other distances like $AB_{431}$ are greater than 1,8. Provided $\alpha$=1,4, the first group will consist of second objects 432, 433, and 434, left unchanged (the first rendering mode consisting here in not altering the second objects). The second group will consist of second objects 431, 435, and 436, slightly faded in appearance, using a second rendering mode e.g. making them look transparent or shaded to the user,
- in FIG. 4C, second object 433 is still the closest one, as the user is dragging the first object 420 towards this second object. $AB_{433}$ is consequently the smallest distance), $AB_{432} \approx$ 1,25, while the other distances like $AB_{433}$ are greater than 1,45. Provided $\alpha$=1,4 as before, the first group will consist of second objects 432 and 433 left unchanged in rendering. The second group will consist of second objects 431, 434, 435, and 436, slightly faded in appearance, using a same second rendering.

**Direction based techniques:**

Another approach to group determination may consist in monitoring the direction 421 imparted to the dragged first object 420. Based on the successive first object positions, i.e. the received drag input in act 320, the processor of the electronic device 400 can determine the trajectory and direction of the first object 420. The history of the directions, using different predictive techniques available to the man skilled in the art, will allow the determination of a direction prediction.

The direction prediction may be associated to a cone of influence 422 as seen in FIG. 4B, defining the area that the dragged object is most likely to visit based on the direction prediction. Any second object falling into that cone will be considered as a potential target, hence belonging to the first group. Every second object falling out of the cone will be associated to the second group.

The cone of influence may be constructed around the direction prediction using an angle opening proportional to the distance from the dragged object to the closest second object.

If A(t) is the first object at instant t, and Bi one of n second objects,

If A(t)Bi the distance between Bi and A's updated position,

If $A(t_0)$ is the first object initial position at the initiation of the drag,

If $A(t_0)$Bi the initial distance between Bi and A's initial position

Let $\alpha$ be the opening angle of the cone of influence defined as:

$$\alpha(t) = 90 * \frac{min_{j=1}^{n}(A(t)Bi)}{min_{j=1}^{n}(A(t_0)Bj)}$$

As the dragged object comes closer to the second objects, as seen in FIGs. 4A to 4C, the opening angle q will get lower and lower, hence giving the user the impression that less and less second objects are potential targets.

One may note that the here above examples were illustrated with linear functions. Non linear function may be used as well to give a sense to the user that the sorting out between groups is either done at the beginning of the drag motion or at the end, as his finger gets closer to the second objects.

**Probabilistic techniques:**

More complex predictive techniques may be used to determine the groups of second objects. For instance, a trajectory of the first object may be estimated through the history of its positions with more or less confidence. The level of confidence will define a region of the GUI defining the positions the dragged first object may reach within that level of confidence. The region will start narrow from the current first object position and open up as one goes closer to the second object of FIG. 4A. The second objects falling within that region will be considered as potential targets, hence from the first group, while second objects falling outside the region will be considered as members of the second group.

The different predictive techniques listed here before, as well as other predictive techniques, will use:

- the updated position of the first object on the GUI,
- the position of the second objects on the GUI,
- optionally a drag direction, drag trajectory or drag pattern as inferred from the history of the received drag inputs and updated first object positions, to determine the projected displacements of the first object from its current position (i.e. new or updated position) and select the second objects that are within reach of these projected displacement.

In a further act 335, the processor of the electronic device 400 will apply their respective rendering modes to the updated first and second groups of second objects. As mentioned before, a transparency or shading as illustrated in FIGs. 4B to 4F may be applied to the members of the second group, as the second rendering mode. The rending of the first group may simply consist in leaving its members unchanged.

Thanks to the present method, as the number of second objects may vary in the second group with each further drag input and first object new position, the user has a constant feedback from the GUI. In a constrained display device of a smartphone or tablet, it will be interesting for the user to receive some guidance, with less and less second objects as potential candidates for the dropping of the first object.

Indeed, a main use case can be that, as the dragged object comes in proximity to the user intended target for a drop, only a reduced number of second objects can be identified as potential targets, leaving a first group limited in size. These are indicated to the user with the first rendering mode, just like the non targets rendering with the second rendering mode. The contrast in rendering between targets and non targets, as defined according to the projected displacements, will help the user to focus on an always more limited number of second objects, thus simplifying the GUI and his drag and drop experience.

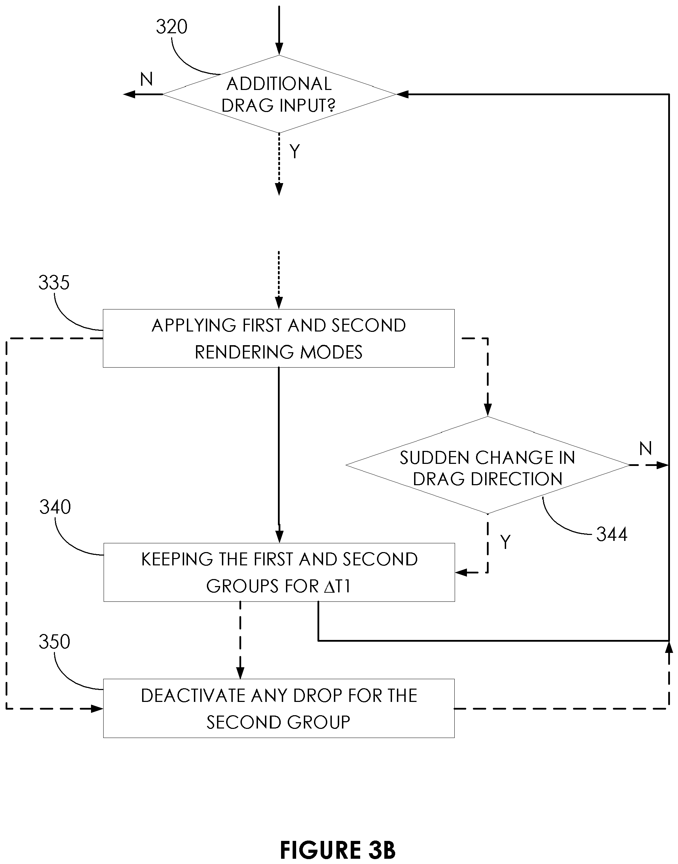

It may be interesting to help further the user, especially when he is using his electronic device 400 in a moving or shaking environment, like a bus or a subway. He may end up moving his finger unexpectedly, for instance when his other hand, holding the device, reacts to a bump. In an additional embodiment of the present method, illustrated with exemplary flowchart of FIG. 3B, the determined first and second groups will be kept during a first predetermined amount of time $\Delta t1$ after their determination. In other words, as seen in FIG. 3B, once the groups have been determined (updating act 330 of FIG. 3A), the processor of the electronic device 400 will keep these groups in a further act 340 during $\Delta t1$ after the updating act 330.

The drag and drop loop may carry on with each further drag input received from the user, with the corresponding update of the first object displacements. Nevertheless, the groups of second objects will remain still for $\Delta t1$. A latency is introduced for the groups thanks to this additional embodiment of the present method.

Going back to FIG. 4C, the first group comprises icons 432 and 433, while the second group comprises the icons 431 and 434 to 436, all shaded as their rendering mode has changed following act 335. The drag inputs are heading into the direction of arrow 421. Unexpectedly, as seen in FIG. 4D, the drag inputs head into another direction (arrow 421 of FIG. 4D). Taking into account the here above defined latency, the processor will update the GUI to show the new first object 420 position. Nevertheless, the group definition, seen through the shadings, will not be altered provided the unexpected change in direction is shorter than the latency $\Delta t1$.

The latency may be systematic. In a further embodiment of the present method, the latency may be triggered by, i.e. conditioned to, a sudden change in drag direction (Yes to act 344 in FIG. 3B). As the processor monitors the additional drag inputs in act 320, it can estimate with each new entry a drag direction using also some previous entries. Once detecting a sudden change in drag direction, the group definition will be kept for the latency $\Delta t1$ (act 340 of FIG. 3B). The sudden change in direction may also be monitored through a motion sensor (not seen in FIGs. 1 or 4) provided with the electronic device 400. Such a motion sensor, like a gyroscopic sensor, may detect motions beyond a given threshold to trigger an answer Yes to act 344.

Once the latency has lapsed (or if no sudden change is detected with the option act 344), the processor of the electronic device 400 will resume with monitoring further drag inputs in act 320.

Whether the latency is implemented or not, it may be interesting also to deactivate the drop properties for the second objects in the determined second group, in an additional act 350 of FIG. 3B (act 350 may be subsequent to the latency activation in act 340, or directly following the group update (act 330) and/or rendering (act 335). Even without the latency implementation, it may be interesting to deactivate or disable the drop capabilities for the second group. Say the user is in close proximity of one of the icons (as second object 433 in FIG. 4C) and an expected move of the finger brings the first icon 420 in dropping position onto second object 434, next to the intended second object 433 (FIG. 4D). The unexpected move may be so sudden that it is faster than the refresh of the group determination (as in FIG. 3A), the drop onto icon 434 will result in an erroneous drop if the dropping properties of icon 434 were not disabled.

Thanks to this additional drop disabling embodiment, such an erroneous drop will be avoided. As the drop properties of second object 434 are disabled, the dropping of the first object 420 onto this second object 434 will be ineffective as seen in FIG. 4E.

The present method will then resume, after the deactivation act 350 with monitoring further drag inputs in act 320. The deactivation may be concomitant to the latency, i.e. implemented together for further mitigations solutions against erroneous drops.

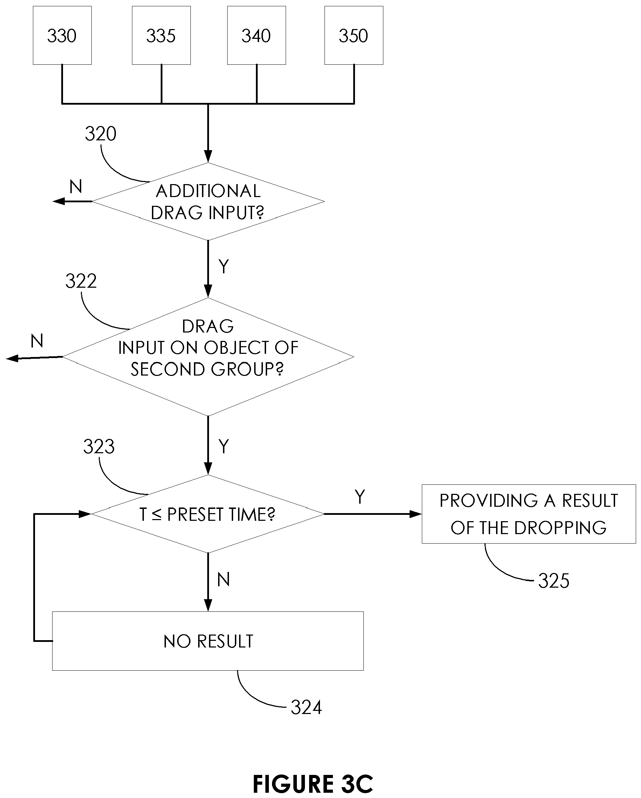

FIG. 3C provides further details of the drop, when the user reaches one of the targets, either from the first or second groups. It actually may be interesting to allow the drop in certain conditions when the first object 420 is dropped over a second object in the second group. In the present system, as illustrated in FIG. 3C, the processor of the electronic device 400 may monitor further drag inputs for the purpose of the present method either after:

- the groups have been determined (act 330), the rendering of the second group being executed in parallel,
- the rendering of the groups is applied(act 335),
- the latency $\Delta t1$ has lapsed (act 340),
- the drop properties of the second group have been disabled (act 350).

If no further drag input is provided, as seen in FIG. 3A, e.g. when the user removes his finger from the touch panel (answer No to act 320), the first object may return to its initial position (act 360). Provided a further input is provided (answer Yes to act 320), in an additional embodiment of the present method, the processor will check if new drag input brings the first object onto one of the second objects of the second group. If not (answer No to act 322), the method will resume with either updating the first and second groups (act 330 of FIG. 3A) or checking if a drop is possible onto a second object of the first group (the group of potential targets).

Provided the first object is in position to be dropped onto a second object of the second group (answer Yes to act 422), as in FIG. 4E, whether there is latency running or not, whether it is disabled for dropping or not, whether there was a sudden motion of the electronic device, it may be interesting to enable the drop nonetheless. In a further embodiment of the present method, the processor will provide a result of the dropping of the first object 420 onto the second object, when the drag input is maintained onto said second object beyond a second predetermined amount of time $\Delta t2$.

To do so, in a further act 323, the processor will monitor if the drag input is maintained onto the second object of the second group beyond $\Delta t2$. If so (answer Yes to act 323), the processor will provide a result of the drop to the user in act 325. The result may be simply by enabling the drop, even though the second object pertains to the second group. For instance, if the drop properties were disabled for that second object, the processor will reactivate its drop properties and allow the drop of the first object after $\Delta t2$.

In an additional embodiment of the present method, the result of the drop may comprise the request of a confirmation of the drop after $\Delta t2$, as seen in FIG. 4F. Indeed a request illustrated with the example of a popup window 440 may be displayed to the user who can confirm by either maintaining the touch input on the second object or by selecting a confirmation icon on the window 440.

Provided the drag input is maintained for less than $\Delta t2$, the drop will not be enabled, and the present method may either end or resume with the monitoring of additional drag input of act 320.

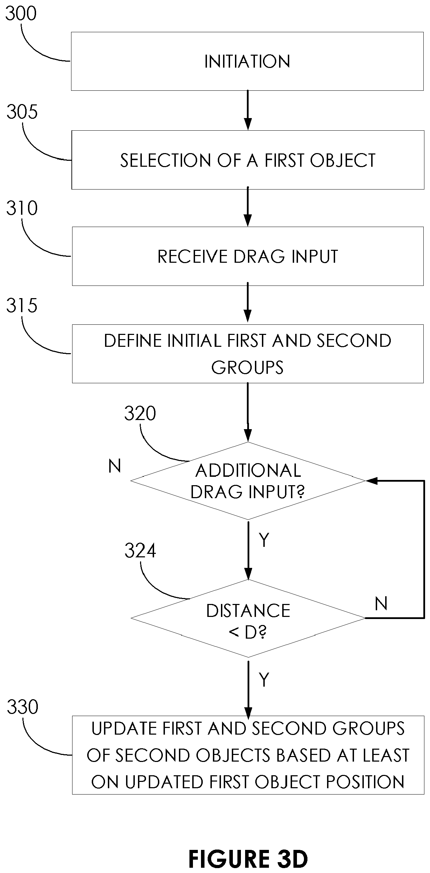

A further embodiment of the present method is illustrated in FIG. 3D. Acts 300 to 320 are the same acts as in FIG. 3A. It may be interesting in some cases to delay the update of the groups as long as the user has not moved the first object by a predetermined distance. In a further act 324, following act 320 wherein an additional drag input is received (answer Yes to 320), the processor of the electronic device 400 will calculate the displacement of the first object from its initial position (when it is selected for the drag and drop operation in act 305). Provided the calculated displacement is still smaller than a predetermined distance (answer No to act 324), the processor will resume with monitoring further drag input in act 320.

If the displacement passes the predetermined distance, the present method will resume with the act 330 of FIG. 3A, i.e. the group update using the received drag input.

The displacement may be measured in different ways, like the total displacement of the dragged first object along the trajectory as defined by the drag inputs. Alternatively it may be a radial displacement, taking into account only displacement towards the second objects.

The predetermined distance may enable the user to see that he has initiated the drag and drop operation before the actual grouping takes place.

In the here above description, and reference to FIGs. 4, it was assumed that the plurality of second objects was aligned. This is in no way a limitation as the present teachings could benefit to second objects distributed around the GUI of the electronic device 400.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:

a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range or number of elements; that is, a plurality of elements may be as few as two elements, and may include an immeasurable number of elements.

## Claims

1. A method of indicating drag and drop targets for a dragged first object (420) among a plurality of second objects (431-436) in a graphical user interface (GUI), the method comprising:

   - rendering (335) with a first rendering mode a first group of the second objects within the GUI onto which the dragged first object is likely to be dropped, based on a projection of its future displacement,
   - rendering (335) with a second rendering mode distinct from the first rendering mode a second group of the second objects, the second group consisting of the remaining second objects,
   - receiving (320) a further drag input on the first object,
   - updating (330) the groups based at least upon the updated position of the first object derived from the received further drag input, the method being **characterized in that** the updating further comprises:
   - disabling (350) the drop capabilities of the second objects in the second group.

2. A method according to claim 1, further comprising:

   - keeping the updated first and second groups during a first predetermined amount of time after their update.

3. A method according to claim 2, the method further comprising estimating a drag direction with each further drag input, wherein the keeping act is conditioned to:

   - determining a sudden change in drag direction of the first object from the received further drag inputs,

4. A method according to claim 1, further comprising,

   - receiving a further drag input of the first object onto one of the second objects in the second group,
   - providing a result of the dropping of the first object onto the one of the second objects in the second group, when the drag input is maintained onto said second object beyond a second predetermined amount of time.

5. A method according to claim 4, the act of providing a result comprising:

   - requesting confirmation of the drop,
   - enabling the drop following confirmation from the user.

6. A method according to claim 4, the act of providing a result comprising:

   - enabling the drop.

7. A method according to claim 1, further comprising a preliminary act of:

   - leaving the groups unchanged as long as the received drag inputs correspond to a displacement below a predetermined distance.

8. An electronic device (100, 200, 400) comprising:

   - a display device (140, 410) for rendering a graphical user interface (GUI) comprising a first object (420) and a plurality of second objects (431-436), the first object being operable to be dragged and dropped onto one of the plurality of second objects,
- a processor (110) for indicating drag and drop targets for the dragged first object among the plurality of second objects, the processor being operable to:

- render with a first rendering mode a first group of the second objects within the GUI onto which the dragged first object is likely to be dropped, based on a projection of its future displacement,
- render with a second rendering mode distinct from the first rendering mode a second group of the second objects, the second group consisting of the remaining second objects,
- receive a further drag input on the first object,
- update the groups based at least upon the updated position of the first object derived from the received further drag input,

the electronic device being **characterized in that** the processor is further arranged to:

- disable the drop capabilities of the second objects in the second group.

**9.** A program product stored on a non-transitory computer-readable storage medium, and executable by a computer in the form of a software agent including at least one software module setup to implement the method according to any of claims 1 to 7.

## Patentansprüche

**1.** Verfahren zum Anzeigen von Ziehen-und-Ablegen("Drag-and-Drop")-Zielen für ein gezogenes erstes Objekt (420) unter mehreren zweiten Objekten (431-436) auf einer grafischen Benutzerschnittstelle (GUI), wobei das Verfahren umfasst:

- Rendern (335), mit einem ersten Rendermodus, einer ersten Gruppe der zweiten Objekte innerhalb der GUI, auf die das gezogene erste Objekt wahrscheinlich abgelegt wird, basierend auf einer Projektion seiner zukünftigen Verschiebung,
- Rendern (335), mit einem zweiten Rendermodus, der sich von dem ersten Rendermodus unterscheidet, einer zweiten Gruppe der zweiten Objekte, wobei die zweite Gruppe aus den verbleibenden zweiten Objekten besteht,
- Empfangen (320) einer weiteren Zieheingabe an dem ersten Objekt,
- Aktualisieren (330) der Gruppen basierend zumindest auf der aktualisierten Position des ersten Objekts, die von der empfangenen weiteren Zieheingabe abgeleitet wird,

wobei das Verfahren **dadurch gekennzeichnet ist, dass** das Aktualisieren ferner umfasst:

- Deaktivieren (350) der Ablegefähigkeiten der zweiten Objekte in der zweiten Gruppe.

**2.** Verfahren nach Anspruch 1, ferner umfassend:

- Halten der aktualisierten ersten und zweiten Gruppe während einer ersten vorbestimmten Zeitspanne nach ihrer Aktualisierung.

**3.** Verfahren nach Anspruch 2, wobei das Verfahren ferner umfasst Schätzen einer Ziehrichtung mit jeder weiteren Zieheingabe, wobei der Haltevorgang eingeschränkt ist auf:

- Ermitteln einer plötzlichen Änderung der Ziehrichtung des ersten Objekts aus den empfangenen weiteren Zieheingaben.

**4.** Verfahren nach Anspruch 1, ferner umfassend:

- Empfangen einer weiteren Zieheingabe des ersten Objekts auf eines der zweiten Objekte in der zweiten Gruppe,
- Bereitstellen eines Ergebnisses des Ablegens des ersten Objekts auf das eine der zweiten Objekte in der zweiten Gruppe, wenn die Zieheingabe, über eine zweite vorbestimmte Zeitdauer hinaus, auf dem zweiten Objekt aufrechterhalten wird.

**5.** Verfahren nach Anspruch 4, wobei der Vorgang des Bereitstellens eines Ergebnisses umfasst:

- Anfordern einer Bestätigung des Ablegens,
- Aktivieren des Ablegens, folgend auf eine Bestätigung von dem Benutzer.

**6.** Verfahren nach Anspruch 4, wobei der Vorgang des Bereitstellens eines Ergebnisses umfasst:

- Aktivieren des Ablegens.

**7.** Verfahren nach Anspruch 1, ferner umfassend einen vorläufigen Vorgang des:

- unverändert Belassens der Gruppen, solange die empfangenen Zieheingaben einer Verschiebung unterhalb einer vorbestimmten Distanz entsprechen.

**8.** Elektronische Vorrichtung (100, 200, 400), umfassend:

- eine Anzeigevorrichtung (140, 410) zum Rendern einer graphischen Benutzerschnittstelle (GUI), die ein erstes Objekt (420) und mehrere zweite Objekte (431-436) umfasst, wobei das erste Objekt betätigbar ist, auf eines der mehreren zweiten Objekte gezogen-und-abgelegt ("dragged-anddropped") zu werden,
- einen Prozessor (110) zum Anzeigen von Ziehen-und-Ablegen-Zielen für das gezogene erste Objekt unter den mehreren zweiten Objekten, wobei der Prozessor betreibbar ist zum:
- Rendern, mit einem ersten Rendermodus, einer ersten Gruppe der zweiten Objekte innerhalb der GUI, auf die das gezogene erste Objekt wahrscheinlich abgelegt wird, basierend auf einer Projektion seiner zukünftigen Verschiebung,
- Rendern, mit einem zweiten Rendermodus, der sich von dem ersten Rendermodus unterscheidet, einer zweiten Gruppe der zweiten Objekte, wobei die zweite Gruppe aus den verbleibenden zweiten Objekten besteht,
- Empfangen einer weiteren Zieheingabe für das erste Objekt,
- Aktualisieren der Gruppen basierend zumindest auf der aktualisierten Position des ersten weiteren Objekts, die von der empfangenen weiteren Zieheingabe abgeleitet wird,

wobei die elektronische Vorrichtung **dadurch gekennzeichnet ist, dass** der Prozessor ferner eingerichtet ist zum:

- Deaktivieren der Ablegefähigkeiten der zweiten Objekte in der zweiten Gruppe.

**9.** Programmprodukt, das auf einem nichtflüchtigen computerlesbaren Speichermedium gespeichert ist und durch einen Computer in Form eines Softwareagenten ausführbar ist, aufweisend mindestens ein Softwaremodul, um das Verfahren nach einem der Ansprüche 1 bis 7 zu implementieren.

## Revendications

**1.** Procédé pour indiquer des cibles de glisser-déposer pour un premier objet (420) glissé parmi une pluralité de deuxièmes objets (431 à 436) dans une interface utilisateur graphique (GUI), le procédé comprenant :

- présenter (335), avec un premier mode de rendu, un premier groupe des deuxièmes objets dans la GUI sur lesquels le premier objet glissé est susceptible d'être déposé, sur la base d'une projection de son futur déplacement,
- présenter (335), avec un deuxième mode de rendu différent du premier mode de rendu, un deuxième groupe des deuxièmes objets, le deuxième groupe étant composé des deuxièmes objets restants,
- recevoir (320) une entrée de glisser supplémentaire sur le premier objet,
- mettre à jour (330) les groupes sur la base au moins de la position mise à jour du premier objet dérivée de l'entrée de glisser supplémentaire,

le procédé étant **caractérisé en ce que** la mise à jour comprend en outre:

- désactiver (350) les capacités à déposer des deuxièmes objets dans le deuxième groupe.

**2.** Procédé selon la revendication 1, comprenant en outre :

- conserver les premier et deuxième groupes mis à jour pendant une première période de temps prédéterminée après leur mise à jour.

**3.** Procédé selon la revendication 2, le procédé comprenant en outre l'estimation d'une direction de glisser avec chaque entrée de glisser supplémentaire, l'action de conservation étant conditionnée par :

- la détermination d'un changement soudain de la direction de glisser du premier objet par rapport aux entrées de glisser supplémentaires reçues.

**4.** Procédé selon la revendication 1, comprenant en outre :

- recevoir une entrée de glisser supplémentaire du premier objet sur l'un des deuxièmes objets dans le deuxième groupe,
- fournir un résultat du dépôt du premier objet sur l'un des deuxièmes objets dans le deuxième groupe lorsque l'entrée de glisser est maintenue sur ledit deuxième objet au-delà d'une deuxième période de temps prédéterminée.

**5.** Procédé selon la revendication 4, l'action consistant à fournir un résultat comprenant :

- demander la confirmation du dépôt,
- activer le dépôt suite à une confirmation de la part de l'utilisateur.

**6.** Procédé selon la revendication 4, l'action consistant à fournir un résultat :

- activer le dépôt.

**7.** Procédé selon la revendication 1, comprenant en outre une action préliminaire consistant à :

- laisser les groupes inchangés tant que les entrées de glisser reçues correspondent à un déplacement inférieur à une distance prédéterminée.

**8.** Dispositif électronique (100,200,400), comprenant :

- un dispositif d'affichage (140, 410) pour présenter une interface utilisateur graphique (GUI) comprenant un premier objet (420) et une pluralité de deuxièmes objets (431 à 436), le premier objet étant utilisable pour être glissé et déposé sur l'un de la pluralité de deuxièmes objets,
- un processeur (110) pour indiquer des cibles de glisser-déposer pour le premier objet glissé parmi la pluralité de deuxièmes objets, le processeur étant utilisable pour :
- présenter, avec un premier mode de rendu, un premier groupe des deuxièmes objets à l'intérieur de la GUI sur laquelle le premier objet glissé est susceptible d'être déposé, sur la base d'une projection de son futur déplacement,
- présenter, avec un deuxième mode de rendu différent du premier mode de rendu, un deuxième groupe des deuxièmes objets, le deuxième groupe étant composé des deuxièmes objets restants,
- recevoir une entrée de glisser supplémentaire sur le premier objet,
- mettre à jour les groupes sur la base au moins de la position mise à jour du premier objet dérivée de l'entrée de glisser supplémentaire,

le dispositif électronique étant **caractérisé en ce que** le processeur est en outre agencé pour :

- désactiver les capacités à déposer des deuxièmes objets dans le deuxième groupe.

**9.** Produit de programme stocké sur un support de stockage lisible par ordinateur, non transitoire, et exécutable par un ordinateur sous la forme d'un agent logiciel comprenant au moins un module logiciel configuré pour mettre en oeuvre le procédé selon l'une quelconque des revendications 1 à 7.

140
100
113
Cont.
AP1
131
AP2
132
CPU
INPUT
AP3
133
115

FIGURE 1

234
235
231-232-233
212
211
221
200

FIGURE 2

300
INITIATION
305
SELECTION OF A FIRST OBJECT
310
RECEIVE DRAG INPUT
315
DEFINE INITIAL FIRST AND SECOND GROUPS
320
N
ADDITIONAL DRAG INPUT?
Y
330
UPDATE FIRST AND SECOND GROUPS OF SECOND OBJECTS BASED AT LEAST ON UPDATED FIRST OBJECT POSITION
335
APPLYING FIRST AND SECOND RENDERING MODES
360
RETURN DRAGGED OBJECT TO INITIAL POSITION

**FIGURE 3A**

320
N
ADDITIONAL DRAG INPUT?
Y
335
APPLYING FIRST AND SECOND RENDERING MODES
SUDDEN CHANGE IN DRAG DIRECTION
N
340
Y
344
KEEPING THE FIRST AND SECOND GROUPS FOR ΔT1
350
DEACTIVATE ANY DROP FOR THE SECOND GROUP

**FIGURE 3B**

330
335
340
350
320
N
ADDITIONAL DRAG INPUT?
Y
322
N
DRAG INPUT ON OBJECT OF SECOND GROUP?
Y
323
T ≤ PRESET TIME?
Y
PROVIDING A RESULT OF THE DROPPING
325
N
NO RESULT
324

FIGURE 3C

300
INITIATION
305
SELECTION OF A FIRST OBJECT
310
RECEIVE DRAG INPUT
315
DEFINE INITIAL FIRST AND SECOND GROUPS
320
N
ADDITIONAL DRAG INPUT?
Y
324
DISTANCE < D?
N
Y
330
UPDATE FIRST AND SECOND GROUPS OF SECOND OBJECTS BASED AT LEAST ON UPDATED FIRST OBJECT POSITION

**FIGURE 3D**

400
410
420
421
431
432
433
434
435
436
15

FIGURE 4A

400
410
420
421
422
431
432
433
434
435
436
15

FIGURE 4B

400
410
420
421
431
432
433
434
435
436
15

FIGURE 4C

400
410
420
421
431
432
433
434
435
436
15

FIGURE 4D

400
410
420
431
432
433
434
435
436
15

FIGURE 4E

400
410
420
440
CONFIRM DROP?
431
432
433
434
435
436
15

FIGURE 4F

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009113330 A1
- US 2010146425 A1